# EUROPEAN PATENT APPLICATION

(11) **EP 4 434 923 A1**
(43) Date of publication of application: **25.09.2024**
(21) Application number: 22895215.6
(22) Date of filing: 12.09.2022
(51) Int. Cl.: B65G 47/86

(54) **TRANSFER DEVICE**

(30) Priority: 18.11.2021 JP 2021187499
(71) Applicant: Mitsubishi Heavy Industries Machinery Systems, Ltd., Kobe-shi, Hyogo 652-8585 (JP)
(72) Inventor: SHIRASAYA, Kento, Kobe-shi, Hyogo 652-8585 (JP); YUI, Sugihiko, Kobe-shi, Hyogo 652-8585 (JP); TSUO, Atsushi, Kobe-shi, Hyogo 652-8585 (JP)
(74) Representative: Studio Torta S.p.A.
(86) International application number: PCT/JP2022/034071
(87) International publication number: WO 2023/089928

(57) **Abstract**

This pitch conversion transfer device includes, a rotation unit that includes a rotation wheel provided with a plurality of grippers for gripping an article to be transferred, and a pitch conversion unit that converts between a first pitch of a gripper that receives the article at a first point and a second pitch different from the first pitch of a gripper that passes the article at a second point. The pitch conversion unit includes, a second cam provided corresponding to the second point, a cam follower that brings a gripper into a passing posture that is the second pitch by operating according to the second cam, and an elastic body that brings a gripper into a waiting posture different from the passing posture between the first and second points.

## Description

### Technical Field

The present disclosure relates to a transfer device that delivers a container filled with an article such as a beverage, from a rotation wheel on an upstream side to a rotation wheel on a downstream side.

### Background Art

A transfer device that delivers a container, which is continuously transferred, from a rotation wheel on an upstream side (hereinafter, referred to as an upstream wheel) to a rotation wheel on a downstream side (hereinafter, referred to as a downstream wheel) is provided with a tool called a gripper that grips the container on an outer periphery of each of the upstream wheel and the downstream wheel. The specifications such as diameters and rotation speeds of the upstream wheel and the downstream wheel, and the number of grippers are determined in consideration of the production capacity of the beverage production facility including the transfer device. The diameters of the upstream wheel and the downstream wheel are distances from the rotation center to positions where the container is gripped. In the present application, the upstream and the downstream are specified with reference to a flowing direction of the article to be transferred. In addition, the upstream and the downstream have a relative meaning, and the same position may be referred to as the downstream or may be referred to as the upstream.

When a pitch of grippers provided in the upstream wheel and a pitch of grippers provided in the downstream wheel are equal to each other, the container can be directly delivered from the upstream wheel to the downstream wheel. However, the pitch of the grippers of the upstream wheel and the pitch of the grippers of the downstream wheel may be different from each other. In this case, for example, as disclosed in PTL 1 and PTL 2, a pitch conversion rotation wheel is interposed between the upstream wheel and the downstream wheel. In the pitch conversion wheel, the pitch of the gripper in a region corresponding to the upstream wheel is converted to the pitch adapted to the downstream wheel when the gripper moves to a region corresponding to the downstream wheel.

In order to convert the pitch of the gripper from a large pitch to a small pitch or from a small pitch to a large pitch, PTL 1 and PTL 2 disclose a pitch conversion mechanism including a cam device that includes a cam having a trajectory curve that circulates around a circle and a cam follower that is provided in the gripper and moves in accordance with the cam. The rotation wheel provided with the gripper including the cam follower is called a pitch conversion wheel.

### Citation List

### Patent Literature

[PTL 1] PCT Japanese Translation Patent Publication No. 2012-526029
[PTL 2] Japanese Patent No. 5874281

### Summary of Invention

### Technical Problem

A pitch conversion wheel rotates at a considerable speed together with an upstream wheel and a downstream wheel. Therefore, a cam follower that rotates together with the pitch conversion wheel receives a mechanical impact due to contact with a cam. In addition, in PTL 2, since the cam has an orbit, a mechanical impact continues to occur while the pitch conversion wheel is driven.

From the above, an object of the present disclosure is to provide a pitch conversion unit capable of reducing a mechanical impact on a rotation wheel.

### Solution to Problem

A pitch conversion transfer device according to the present disclosure includes a rotation unit that includes a rotation wheel in which a plurality of grippers that grip an article to be transferred are swingably provided, and a pitch conversion unit that performs conversion between a first pitch of the gripper that receives the article at a first point and a second pitch different from the first pitch of the gripper that delivers the article at a second point.

A pitch conversion unit according to the present disclosure includes a second cam that is provided corresponding to the second point, a cam follower that brings the gripper into a delivery posture that is the second pitch by operating in accordance with the second cam, and an elastic body that brings the gripper into a waiting posture different from the delivery posture between the first point and the second point.

### Advantageous Effects of Invention

According to the present disclosure, since the elastic body that brings the gripper into the waiting posture different from the delivery posture is provided between the first point and the second point, it is not necessary to provide the cam in a range where the elastic body can bring the gripper into the waiting posture. Accordingly, in the pitch conversion transfer device of the present disclosure, mechanical impact due to contact between the cam and the cam follower can be suppressed in the range, and thus mechanical impact can be reduced.

### Brief Description of Drawings

Fig. 1 is a plan view showing a disposition relationship among three transfer devices, which are an upstream transfer device, a pitch conversion transfer device, and a downstream transfer device, according to an embodiment of the present disclosure.
Fig. 2 is a plan view showing the upstream transfer device and the pitch conversion transfer device.
Fig. 3 is a plan view showing the pitch conversion transfer device and the downstream transfer device.
Fig. 4 is a partial front cross-sectional view showing the pitch conversion transfer device.
Fig. 5 is a plan view showing the pitch conversion transfer device.
Fig. 6 is a cross-sectional view showing the pitch conversion transfer device and taken along line VI-VI of Fig. 4.
Fig. 7 is a front view showing a main portion of the pitch conversion transfer device.
Figs. 8A and 8B are plan views showing a cam follower for swinging the gripper and a coil spring for returning the gripper to a waiting posture.
Figs. 9A and 9B are plan views showing a cam in the pitch conversion transfer device, and an upper section of Figs. 9A and 9B shows a cam corresponding to an upstream transfer device and a lower section of Figs. 9A and 9B shows a cam corresponding to a downstream transfer device.

### Description of Embodiments

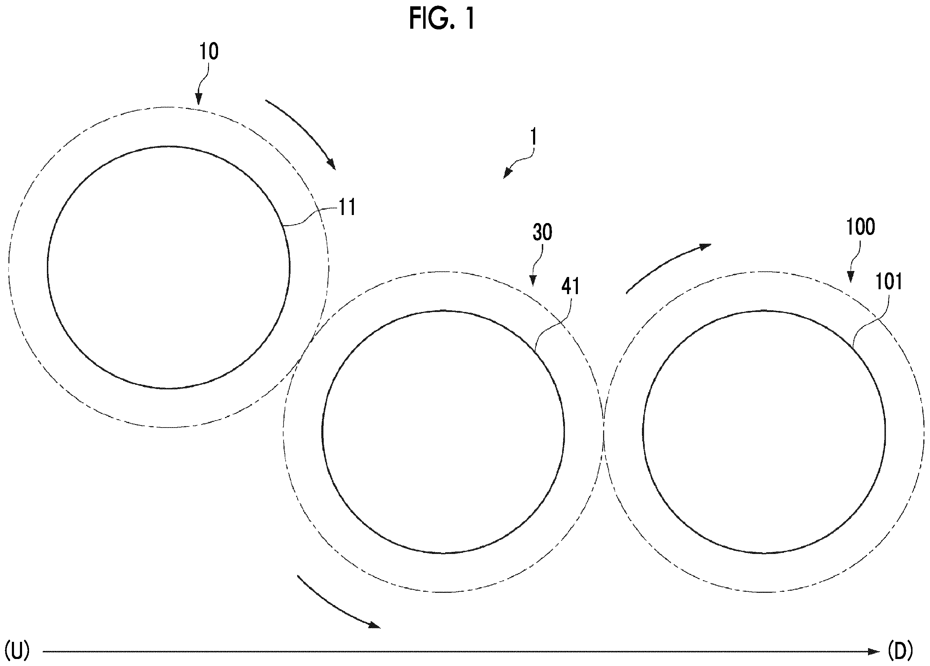

### [Summary of transfer system 1: Fig. 1]

Hereinafter, a transfer system 1 according to an embodiment of the present disclosure will be described with reference to the accompanying drawings.

As shown in Fig. 1, the transfer system 1 includes an upstream transfer device 10, a pitch conversion transfer device 30, and a downstream transfer device 100, and transfers a container PB, which is an example of an article, in this order from an upstream (U) to a downstream (D). That is, the pitch conversion transfer device 30 receives the container PB from the upstream transfer device 10, and the container PB is delivered from the pitch conversion transfer device 30 to the downstream transfer device 100. In Fig. 1, as indicated by arrows, a rotation wheel 11 of the upstream transfer device 10 rotates clockwise, a rotation wheel 41 of the pitch conversion transfer device 30 rotates counterclockwise, and a rotation wheel 101 of the downstream transfer device 100 rotates clockwise.

Each of the upstream transfer device 10, the pitch conversion transfer device 30, and the downstream transfer device 100 include a gripper that grips the container PB. A first gripper G10 and a third gripper G100 in the upstream transfer device 10 and the downstream transfer device 100 have a first pitch and a second pitch, respectively, which are constant. In contrast, a second gripper G30 of the pitch conversion transfer device 30 is the first pitch when receiving the container PB from the upstream transfer device 10, but is the second pitch when delivering the container PB to the downstream transfer device 100. In this way, in a process of the pitch conversion transfer device 30 transferring the container PB from the upstream transfer device 10 to the downstream transfer device 100, a pitch of the second gripper G30 is converted from the first pitch to the second pitch. In addition, in a process in which the pitch conversion transfer device 30 delivers the container PB to the downstream transfer device 100 and then receives the container PB from the upstream transfer device 10, the pitch of the second gripper G30 is converted from the second pitch to the first pitch.

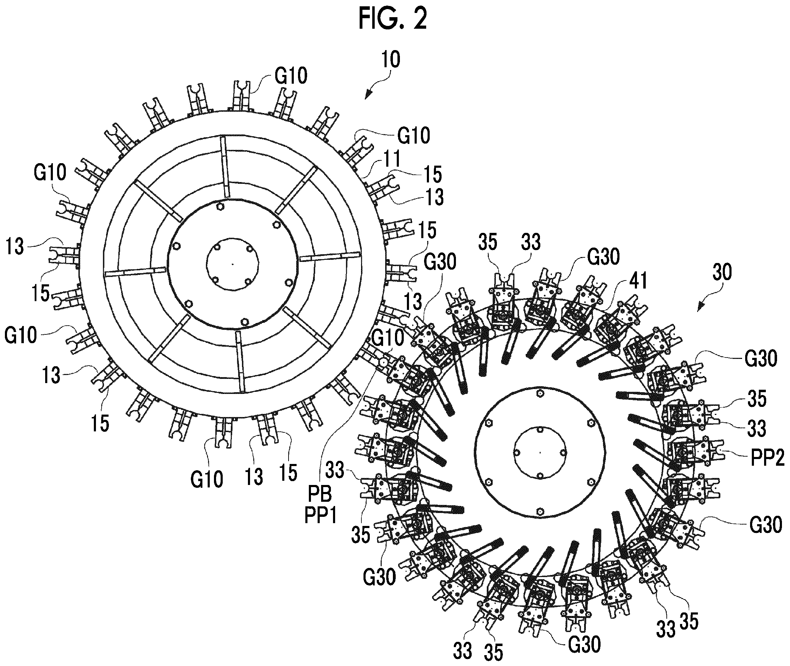

The pitch conversion from the first pitch to the second pitch and the pitch conversion from the second pitch to the first pitch in the pitch conversion transfer device 30 are performed by a first cam 51, a second cam 55, and a cam follower 60. However, the first cam 51 and the cam follower 60 come into contact with each other and the second cam 55 and the cam follower 60 come into contact with each other due to an elastic force applied to the second gripper G30, remaining within a limited region related to the pitch conversion. Hereinafter, the transfer system 1 will be described in more detail with reference to Figs. 2 to 9B in order.

### [Upstream transfer device 10: Fig. 2]

The upstream transfer device 10 receives the container PB transferred from a further upstream (U) and transfers the container PB to the pitch conversion transfer device 30. A first pitch of 24 first grippers G10 included in the upstream transfer device 10 as an example is fixed to be constant.

As shown in Fig. 2, the upstream transfer device 10 includes the rotation wheel 11 that is rotated by a driving source (not illustrated), and a plurality of first grippers G10 that are attached to an outer periphery of the rotation wheel 11. The upstream transfer device 10 receives the container PB from the upstream (U) and delivers the container PB to the pitch conversion transfer device 30 at a first point PP1.

Each of the first grippers G10 includes a first grip piece 13 and a second grip piece 15, and the first grip piece 13 and the second grip piece 15 are configured to perform an active opening and closing operation. When receiving the container PB, the first grip piece 13 and the second grip piece 15 are opened, and the first grip piece 13 and the second grip piece 15 are closed to grip the container PB from receiving the container PB to moving to the first point PP1. Then, the first grip piece 13 and the second grip piece 15 are opened at the first point PP1 to deliver the container PB to the pitch conversion transfer device 30.

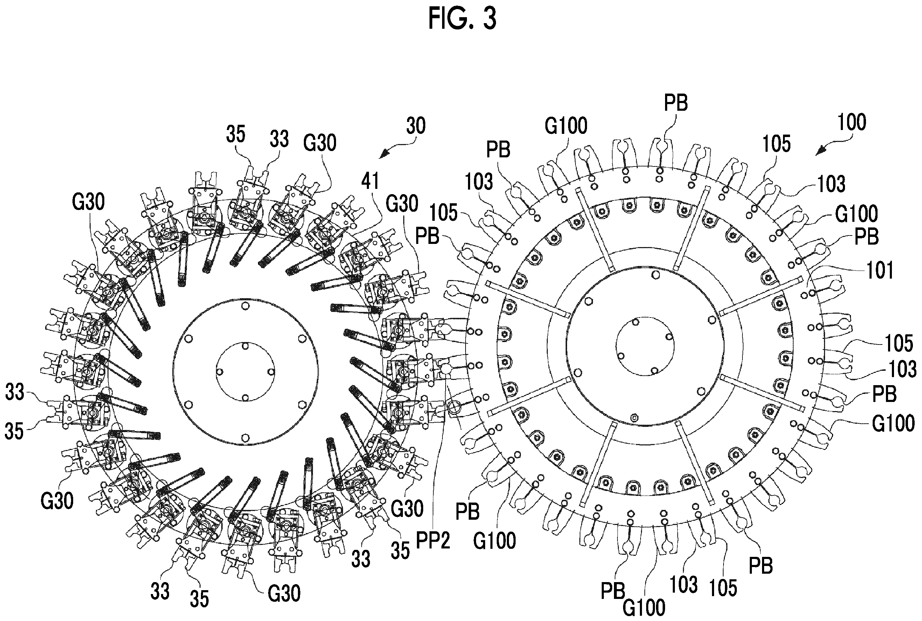

### [Pitch conversion transfer device 30: Figs. 2 and 3]

The pitch conversion transfer device 30 receives the container PB transferred by the upstream transfer device 10 and transfers the container PB toward the downstream transfer device 100 while converting the pitch of the second gripper G30 from the first pitch to the second pitch. The pitch conversion transfer device 30 includes 24 second grippers G30 as an example.

As shown in Fig. 2, the pitch conversion transfer device 30 includes the rotation wheel 41 that is rotated by a driving source (not illustrated), and a plurality of second grippers G30 that are attached to an outer periphery of the rotation wheel 41. The pitch conversion transfer device 30 receives the container PB at the first point PP1 at the first pitch and delivers the container PB to the downstream transfer device 100 at the second point PP2 at the second pitch.

Each of the second grippers G30 include a first grip piece 33 and a second grip piece 35. Unlike the first gripper G10, the second gripper G30 cannot perform an active opening and closing operation of the first grip piece 33 and the second grip piece 35. However, when the container PB is delivered from the first gripper G10 and the container PB is delivered to the second gripper G30, the first gripper G10 and the third gripper G100 passively perform an opening and closing operation.

Other configurations of the pitch conversion transfer device 30 will be described in detail after the description of the downstream transfer device 100.

### [Downstream transfer device 100: Fig. 3]

The downstream transfer device 100 receives the container PB transferred by the pitch conversion transfer device 30 and further transfers the container PB toward the downstream (D). A second pitch of 32 third grippers G100 included in the downstream transfer device 100 as an example is fixed to be constant.

As shown in Fig. 3, the downstream transfer device 100 includes the rotation wheel 101 that is rotated by a driving source (not illustrated), and a plurality of third grippers G100 that are attached to an outer periphery of the rotation wheel 101. The downstream transfer device 100 receives the container PB from the pitch conversion transfer device 30 at the second point PP2, and further transfers the container PB toward the downstream (D).

Each of the third grippers G100 includes a first grip piece 103 and a second grip piece 105, and the first grip piece 103 and the second grip piece 105 are configured to perform an active opening and closing operation. When receiving the container PB at the second point PP2, the first grip piece 103 and the second grip piece 105 are opened, and the first grip piece 103 and the second grip piece 105 are closed to grip the container PB from receiving the container PB. Then, the first grip piece 103 and the second grip piece 105 are opened to deliver the container PB toward the downstream (D).

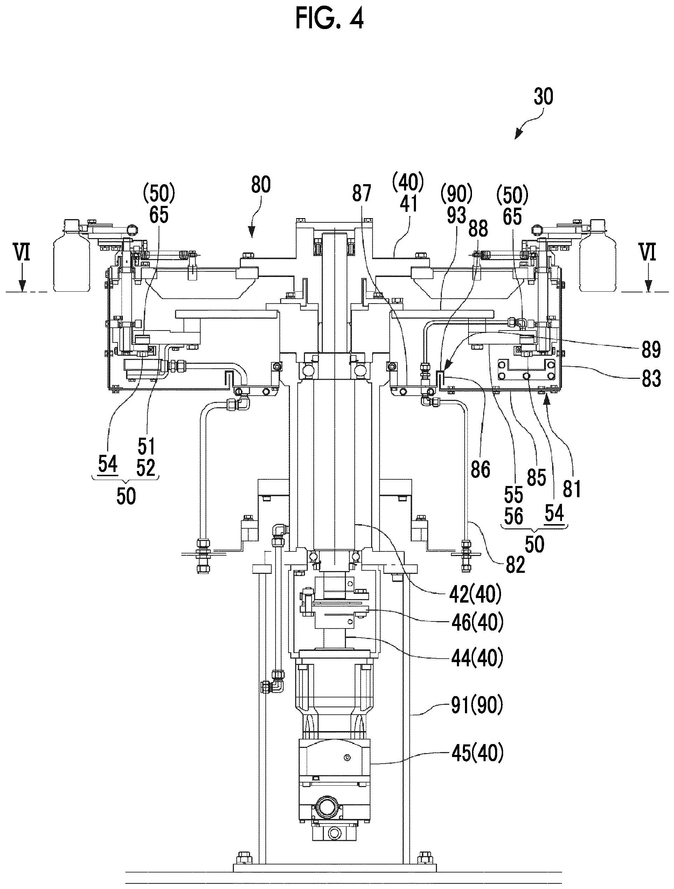

### [Details of pitch conversion transfer device 30: Figs. 4 to 9B]

Next, the pitch conversion transfer device 30 will be described in more detail with reference to Figs. 4 to 9B.

The pitch conversion transfer device 30 includes the following configuration including the rotation wheel 41 and the plurality of second grippers G30 described above.

As shown in Fig. 4, the pitch conversion transfer device 30 includes a rotation wheel 41, a rotation unit 40 that includes an element for rotating the rotation wheel 41, a pitch conversion unit 50 that is supported by the rotation unit 40 and converts the pitch of the second gripper G30, and a fixing unit 90 that rotatably supports the rotation unit 40.

### [Rotation unit 40: Fig. 4]

The rotation unit 40 includes a rotary shaft 42 that supports the rotation wheel 41 and rotates together with the rotation wheel 41 as an element related to the rotational motion of the rotation wheel 41, and a driving source that rotatably supports the rotary shaft 42. The driving source includes a drive shaft 44 that is connected to the rotary shaft 42 by a coupler 46, and a drive motor 45 that rotates the drive shaft 44. The driving source is configured such that the drive motor 45 is fixed to the fixing unit 90 not to be rotatable, while the drive shaft 44 is rotatably supported by the fixing unit 90. Therefore, when the drive shaft 44 is rotated by the drive motor 45, the rotation wheel 41 is rotated in a predetermined direction. Along with rotation of the rotation wheel 41, a plurality of second grippers G30 supported by the rotation wheel 41 also rotate.

### [Pitch conversion unit 50: Figs. 4, 5, 6, and 7]

The pitch conversion unit 50 converts the pitch of the second gripper G30 related to receiving the container PB from the upstream transfer device 10, which is P1, into the pitch of the second gripper G30 related to delivery of the container PB to the downstream transfer device 100, which is P2. The pitch conversion unit 50 performs conversion between the first pitch and the second pitch by using a cam mechanism.

Before specifically describing the configuration of the pitch conversion unit 50, the relationship between the number of grippers and the pitch of the grippers in the upstream transfer device 10, the pitch conversion transfer device 30 (the pitch conversion unit 50), and the downstream transfer device 100 will be described below. The transfer diameter R (distance from the rotation center to the transfer trajectory of the container PB) in the upstream transfer device 10, the pitch conversion transfer device 30, and the downstream transfer device 100 is the same. In addition, the number of grippers N1 is smaller than the number of grippers N2, and the first pitch (P1) is larger than the second pitch (P2).
Upstream transfer device 10: Number of grippers; N1, pitch; P1
Pitch conversion unit 50: Number of grippers; N1, pitch; P1, P2
Downstream transfer device 100: Number of grippers; N2, pitch; P2

The pitch conversion unit 50 performs conversion between the first pitch and the second pitch by using a cam mechanism similar to a linear cam in the flat cam. However, in a normal linear cam, the cam moves in a first direction, and a cam follower in contact with the cam moves in a second direction orthogonal to the first direction with the movement of the cam. On the other hand, in the pitch conversion unit 50, the cam follower moves in both the first direction and the second direction with respect to the cam whose position is fixed. In the pitch conversion unit 50, cams corresponding to the cam are the first cam 51 and the second cam 55, which have a plate shape and will be described later, and the cam follower 60 is provided corresponding to each of the second grippers G30 which correspond to the first cam 51 and the second cam 55. The first cam 51 is related to the pitch conversion when the container PB is received from the upstream transfer device 10, and the second cam 55 is related to the pitch conversion when the container PB is delivered to the downstream transfer device 100. While the positions of the first cam 51 and the second cam 55 are fixed, the cam follower 60 is related to the first cam 51 and the second cam 55 in a process of rotational movement along a circular movement trajectory together with the second gripper G30. That is, the cam follower 60 is a common cam follower for the first cam 51 and the second cam 55.

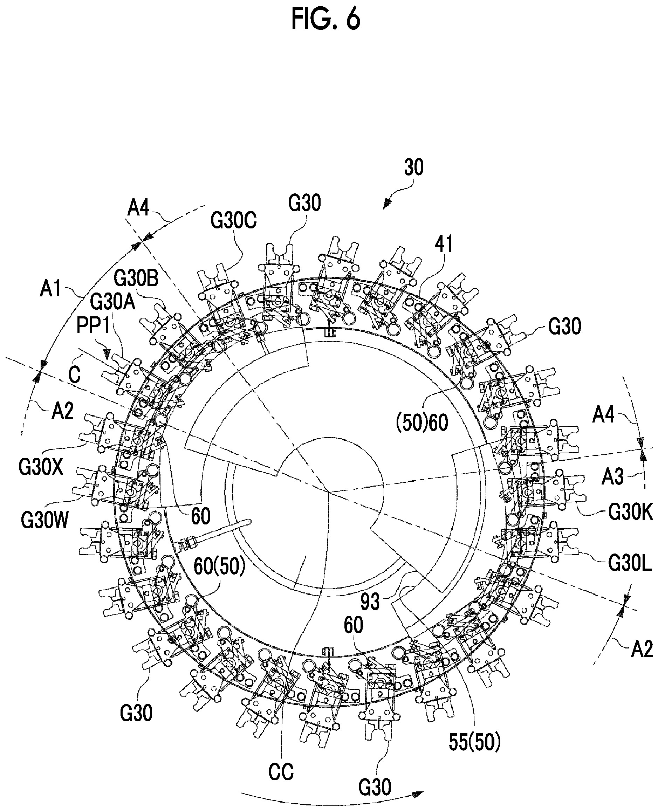

### [First cam 51, second cam 55: Figs. 4 and 6]

As shown in Figs. 4 and 6, the first cam 51 is provided on a side corresponding to the upstream transfer device 10 and is fixed and supported by a cam support 93 that configures the fixing unit 90.

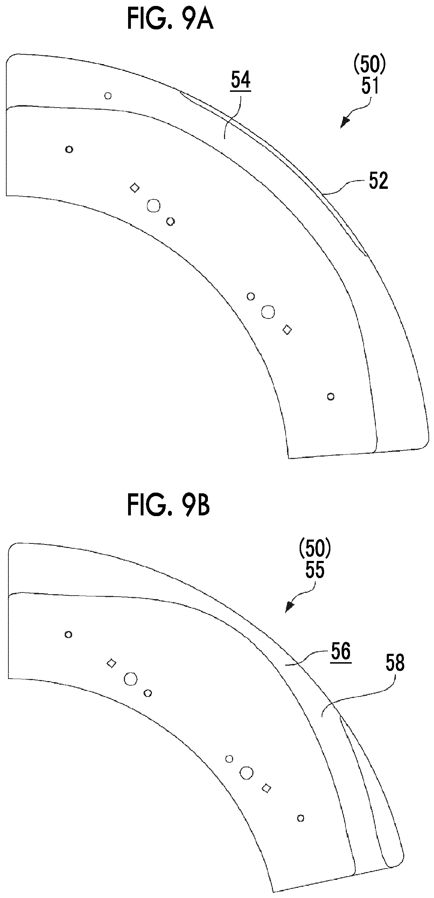

As shown in an upper side of Figs. 9A and 9B, the first cam 51 includes a first cam plate 52, and a first cam groove 54 formed in the first cam plate 52 and into which a cam pin 65 of the cam follower 60 is inserted. In a process in which the cam pin 65 moves in the first cam groove 54, the pitch of the second gripper G30 is set to the first pitch, and the container PB is received. As shown in Fig. 4, the first cam 51 is disposed such that the first cam groove 54 faces downward, and the cam pin 65 is inserted into the first cam groove 54 from below.

Next, as shown in Figs. 4 and 6, the second cam 55 is provided on a side corresponding to the downstream transfer device 100, and is fixed and supported by the cam support 93 that configures the fixing unit 90.

As shown in a lower side of Figs. 9A and 9B, the second cam 55 includes a second cam plate 56, and a second cam groove 58 formed in the second cam plate 56 and into which the cam pin 65 is inserted. In a process in which the cam pin 65 moves in the second cam groove 58, the pitch of the second gripper G30 is set to the second pitch, and the container PB is delivered. As shown in Fig. 4, the second cam 55 is disposed such that the second cam groove 58 faces downward, and the cam pin 65 is inserted into the second cam groove 58 from below.

### [Cam follower 60: Figs. 6, 7, 8A, 8B, 9A and 9B]

Next, the cam follower 60 that configures the cam mechanism together with the first cam 51 and the second cam 55 will be described. As shown in Fig. 6, the cam follower 60 is provided corresponding to each of the second grippers G30.

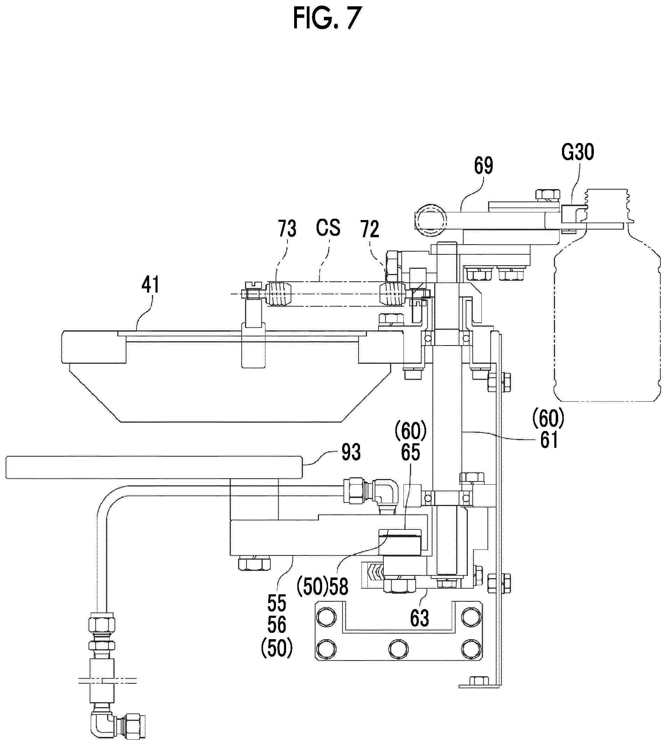

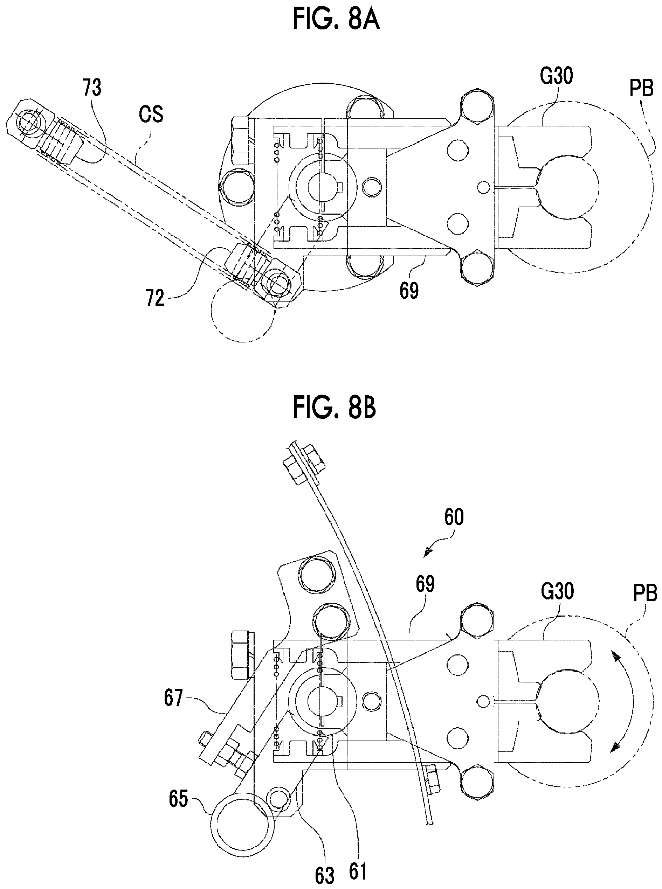

As shown in Figs. 7, 8A and 8B, the cam follower 60 includes a main shaft 61 fixed to the second gripper G30 and a swing arm 63 of which one end is rotatably provided on the main shaft 61. In addition, the cam follower 60 includes a cam pin 65 that is rotatably provided at the other end of the swing arm 63, and a regulating body 67 that regulates a swing range of the swing arm 63.

The cam pin 65 has a cylindrical form. For example, when the cam pin 65 is inserted into the second cam groove 58 of the second cam 55 as shown in Fig. 7 and the second gripper G30 corresponding to the cam pin 65 is rotationally moved, the cam pin 65 is moved along the second cam groove 58, and thus the second gripper G30 is swung in directions of both arrows in Fig. 8B through the swinging of the swing arm 63. The swinging of the second gripper G30 will be described in detail below.

The regulating body 67 is fixed at a position in Fig. 8B and abuts against the swing arm 63 in a state where the swing arm 63 is not swung. That is, in Fig. 8, the swing arm 63 swings counterclockwise in the process of the cam pin 65 moving inside the second cam groove 58, and the swing arm 63 swings clockwise and returns to the waiting posture when the cam pin 65 comes out of the second cam groove 58. However, the swing arm 63 abuts against the regulating body 67 and any further swinging of the swing arm 63 is regulated.

As described above, when the cam pin 65 comes out of the second cam groove 58, the swing arm 63 swings clockwise and returns to the waiting posture. However, as will be described below, the cam follower 60 uses an elastic force to return to the waiting posture.

As shown in Figs. 7, 8A and 8B, a support 69 to which the second gripper G30 is fixed is rotatably supported by a main shaft 61 of the cam follower 60. A first support cylinder 72 that supports a coil spring CS that exerts an elastic force related to the return to the waiting posture is provided on the support 69. The cam follower 60 includes a second support cylinder 73 that supports the coil spring CS together with the first support cylinder 72, at a position corresponding to the first support cylinder 72. The coil spring CS is attached between the first support cylinder 72 and the second support cylinder 73 to impart a tensile elastic force to the first support cylinder 72 and the second support cylinder 73.

### [Fixing unit 90: Fig. 4]

Next, the fixing unit 90 that rotatably supports the rotation unit 40 will be described.

As shown in Fig. 4, the fixing unit 90 includes a holding cylinder 91 that accommodates the rotary shaft 42 of the rotation unit 40, the drive motor 45, and the like, and a cam support 93 that is fixed to the lower side of the rotation wheel 41 in the vicinity of the upper end of the holding cylinder 91. The cam support 93 supports the first cam 51 and the second cam 55.

### [Sealing structure: Fig. 4]

As shown in Fig. 4, the pitch conversion transfer device 30 includes a sealing structure 80 from the rotation unit 40 to the fixing unit 90. The sealing structure 80 sets the inside thereof to a positive pressure by blocking the outside air and by supplying air to the inside thereof. In this manner, the infiltration of water into the inside of the sealing structure 80 is prevented.

The sealing structure 80 is configured by a rotation wheel 41 and a rotary shaft 42 that integrally supports the rotation wheel 41, on an upper side of the pitch conversion transfer device 30. That is, the rotation wheel 41 and the rotary shaft 42 have air tightness with respect to the outside air.

Next, the sealing structure 80 is configured by a first surrounding body 81 and a second surrounding body 87 on a radially outer side and a lower side of the pitch conversion transfer device 30. The first surrounding body 81 rotates together with the rotation unit 40, and the second surrounding body 87 is not moved and the position thereof is fixed together with the fixing unit 90.

As shown in Fig. 4, the first surrounding body 81 includes a side wall 83 that hangs downward from the radially outer side of the rotation wheel 41, and a bottom wall 85 that extends inward from a lower end of the side wall 83 toward the rotary shaft 42. The side wall 83 has a cylindrical form. The bottom wall 85 has a disk-like form, and an inner end portion thereof is separated from the rotary shaft 42 by a predetermined distance. An inner periphery of the bottom wall 85 is formed with a first labyrinth element 86 that stands upward, and a labyrinth structure 89 is formed together with an outer periphery of the second surrounding body 87.

The second surrounding body 87 has a disk-like form extending toward an inner peripheral side of the bottom wall 85, and the inner peripheral side thereof is fixed to an outer periphery of the holding cylinder 91. A second labyrinth element 88 having a U-shaped cross section open downward is formed on an outer peripheral side of the second surrounding body 87, and the first labyrinth element 86 of the bottom wall 85 is inserted, so that the labyrinth structure 89 is formed.

In the sealing structure 80, an air supply pipe 82 for supplying air to the inside of the sealing structure 80 is provided to penetrate the second surrounding body 87. By supplying the air to the inside of the sealing structure 80 via the air supply pipe 82, the inside of the sealing structure 80 has a positive pressure with respect to the outside thereof. Therefore, in conjunction with the labyrinth structure 89, it is possible to prevent the infiltration of water to the inside of the sealing structure 80.

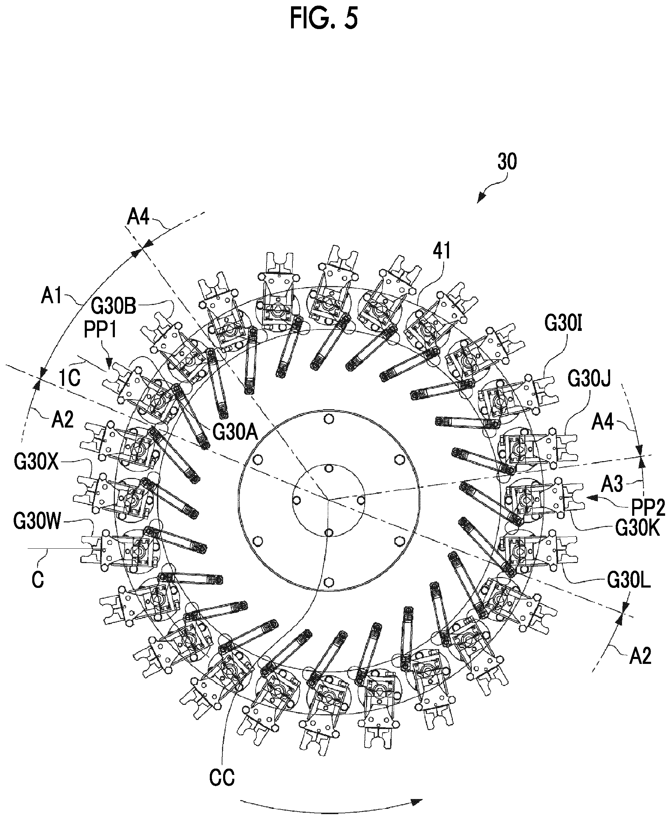

### [Operation of second gripper G30 in pitch conversion transfer device 30: Figs. 5 and 6]

Next, the operation of the second gripper G30 in the pitch conversion transfer device 30 will be described with reference to Figs. 5 and 6 by dividing the operation into the following first region to fourth region shown in Figs. 5 and 6. In the pitch conversion transfer device 30, the second gripper G30 repeatedly moves in the first region to the fourth region.

First region A1: a region related to the delivery of the container PB from the upstream transfer device 10 to the pitch conversion transfer device 30.

Second region A2: a region after passing the first region A1 to a following third region A3 related to the delivery of the container PB from the pitch conversion transfer device 30 to the downstream transfer device 100.

Third region A3: a region related to the delivery of the container PB from the pitch conversion transfer device 30 to the downstream transfer device 100.

Fourth region A4: a region after passing the third region A3 to a following first region A1 related to the delivery of the container PB from the upstream transfer device 10 to the pitch conversion transfer device 30.

### [Operation in first region A1: Figs. 5 and 6]

In the first region A1, the pitch of the second gripper G30 is set to the first pitch to match the fixed first pitch of the first gripper G10 of the upstream transfer device 10. Specifically, as shown in Figs. 5 and 6, the pitch between the second gripper G30A that performs delivery of the container PB to the first point PP1 and the second gripper G30B that performs delivery of the container PB next to the second gripper G30A is adjusted to the first pitch. When the second gripper G30A completes the reception of the container PB at the first point PP1, the second gripper G30A moves counterclockwise from the first point PP1, and the second gripper G30B receives the container PB at the first point PP1. At this time, a pitch between the second gripper G30C that receives the container PB next to the second gripper G30B and the second gripper G30B is set to the first pitch. Thereafter, similarly, a pitch between the second gripper G30 that subsequently receives the container PB and the second gripper G30 that receives the container PB at the first point PP1 is set to the first pitch.

In order to smoothly perform the reception, the second gripper G30A that receives the container PB at the first point PP1 needs to have the central axis C in a plan view intersecting the rotation center CC of the rotation wheel 41. This is also the same for the first gripper G10 that performs the delivery of the container PB in the upstream transfer device 10. Regarding this point, the second gripper G30B that subsequently receives the container PB and the second gripper G30X that received the container PB ahead of the second gripper G30A will be described as follows. The central axis C divides the second gripper G30A into the first grip piece 33 and the second grip piece 35 symmetrically in a plan view.

Also, as shown in Figs. 5 and 6, it is preferable that the central axes C of the second gripper G30B and the second gripper G30X intersect the rotation center CC of the rotation wheel 41. However, the central axis C of the second gripper G30B may intersect the rotation center CC of the rotation wheel 41 at least before reaching the first point PP1. In addition, the central axis C of the second gripper G30X may be deviated from the rotation center CC of the rotation wheel 41 after receiving the container PB.

The pitch adjustment operation described above is realized by the cam pins 65 associated with each of the second grippers G30A, G30B, G30C, and the like passing through the first cam groove 54 of the first cam 51.

As described above, since a transfer diameter of the upstream transfer device 10 and a transfer diameter of the pitch conversion transfer device 30 are the same, it is sufficient to adjust only the first pitch in the first region A1.

### [Operation in second region A2: Figs. 5 and 6]

The second gripper G30 that received the container PB in the first region A1 moves to the second region A2. In the second region A2, the pitch of the second gripper G30 is not adjusted, and the second gripper G30 operates as follows.

As shown in Figs. 5 and 6, the second gripper G30W that receives the container PB ahead of the second gripper G30X is still at a position related to the first cam 51, but the central axis C thereof swings clockwise in the drawing while being deviated from the rotation center CC of the rotation wheel 41. Then, the second gripper G30 is inclined and moved clockwise after passing the first region A1 to the third region A3.

### [Operation in third region A3]

In the third region A3, the pitch of the second gripper G30 is set to the second pitch to match the fixed second pitch of the third gripper G100 of the downstream transfer device 100. Specifically, as shown in Figs. 5 and 6, the pitch between the second gripper G30K that performs delivery of the container PB to the second point PP2 and the second gripper G30L that performs delivery of the container PB next to the second gripper G30K is adjusted to the second pitch. When the second gripper G30K completes the delivery of the container PB at the second point PP2, the second gripper G30K moves counterclockwise from the second point PP2, and the second gripper G30L reaches the second point PP2 to deliver the container PB. At this time, a pitch between the second gripper G30K that delivers the container PB next to the second gripper G30L and the second gripper G30L is set to the second pitch. Thereafter, similarly, a pitch between the second gripper G30 that subsequently delivers the container PB and the second gripper G30 that delivers the container PB at the second point PP2 is set to the second pitch.

In order to smoothly perform the delivery, the second gripper G30K that delivers the container PB to the second point PP2 needs to have the central axis C in a plan view intersecting the rotation center CC of the rotation wheel 41. This is also the same for the third gripper G100 that performs the reception of the container PB in the downstream transfer device 100. Regarding this point, each of the central axes C of the second gripper G30L that subsequently deliver the container PB and the second gripper G30J that delivered the container PB ahead of the second gripper G30K does not intersect the rotation center CC of the rotation wheel 41. That is, the central axis C of the second gripper G30K directly related to the delivery of the container PB intersects the rotation center CC, but each of the central axes C of the second gripper G30J and the second gripper G30L, related to the delivery of the container PB in front of and behind the second gripper G30K, do not intersect the rotation center CC of the rotation wheel 41.

The pitch adjustment operation described above is realized by the cam pins 65 associated with each of the second grippers G30K, G30L, and the like passing through the second cam groove 58 of the second cam 55.

As described above, since the transfer diameter of the upstream transfer device 10 and the transfer diameter of the pitch conversion transfer device 30 are the same, it is sufficient to adjust only the second pitch in the third region A3.

### [Operation in fourth region A4]

The second gripper G30 that delivered the container PB in the third region A3 moves to the fourth region A4. In the fourth region A4, the pitch of the second gripper G30 is not adjusted, and the second gripper G30 operates as follows.

As shown in Figs. 5 and 6, the central axis C of the second gripper G30I that receives the container PB ahead of the second gripper G30J swings clockwise in the drawing while being deviated from the rotation center CC of the rotation wheel 41. Then, the second gripper G30 is inclined and moved clockwise after passing the fourth region A4 to the first region A1.

### [Effect of pitch conversion transfer device 30]

The pitch conversion transfer device 30 described above has the following effects.

According to the pitch conversion transfer device 30, the pitch when the container PB is received from the upstream transfer device 10 and the pitch when the container PB is delivered to the downstream transfer device 100 can be selected from the first pitch and the second pitch. Therefore, even when the first pitch in the upstream transfer device 10 and the second pitch in the downstream transfer device 100 are different from each other, the processing in the upstream transfer device 10 and the downstream transfer device 100 can be continuously performed by interposing the pitch conversion transfer device 30 therebetween.

Next, the pitch conversion transfer device 30 is provided with the first cam 51 and the second cam 55 corresponding to the first region A1 and the third region A3 in which the pitch conversion is performed. However, no cam is provided in the second region A2 and the fourth region A4 between the first region A1 and the third region A3. Therefore, in the second region A2 and the fourth region A4, the cam pin 65 does not come into contact with the cam. Therefore, the impact on the pitch conversion transfer device 30 is reduced.

### [Supplementary note]

A pitch conversion transfer device 30 according to a first embodiment of the present disclosure includes a rotation unit 40 that includes a rotation wheel 41 in which a plurality of grippers G30 that grip an article to be transferred are swingably provided, and a pitch conversion unit 50 that performs conversion between a first pitch of the gripper G30 that receives the article at a first point PP1 and a second pitch different from the first pitch of the gripper that delivers the article at a second point PP2.

The pitch conversion unit 50 according to the first embodiment includes a second cam 55 that is provided corresponding to the second point PP2, a cam follower 60 that brings the gripper G30 into a delivery posture that is the second pitch by operating in accordance with the second cam 55, and an elastic body that brings the gripper G30 into a waiting posture different from the delivery posture between the first point PP1 and the second point PP2.

The pitch conversion transfer device 30 according to the first embodiment is provided with the second cam 55 corresponding to the third region A3 related to the pitch conversion. However, no cam is provided in the second region A2 and the fourth region A4 that are in front of and behind the third region A3. Therefore, in the second region A2 and the fourth region A4, the cam pin 65 does not come into contact with the cam. Therefore, the impact on the pitch conversion transfer device 30 is reduced.

The pitch conversion unit 50 according to a second embodiment of the present disclosure includes a first cam 51 that is provided corresponding to the first point PP1, the cam follower 60 that brings the gripper G30 into a receiving posture that is the first pitch by operating in accordance with the first cam 51, and the elastic body that brings the gripper G30 into the waiting posture different from the receiving posture between the first point PP1 and the second point PP2.

The pitch conversion transfer device 30 according to the second embodiment is provided with the first cam 51 corresponding to the first region A1 related to the pitch conversion. However, no cam is provided in the second region A2 and the fourth region A4 that are in front of and behind the first region A1. Therefore, in the second region A2 and the fourth region A4, the cam pin 65 does not come into contact with the cam. Therefore, the impact on the pitch conversion transfer device 30 is reduced.

The cam follower 60 that operates in accordance with the second cam 55 according to a third embodiment of the present disclosure brings the gripper G30 into the delivery posture that is the second pitch, in opposition to an elastic force by the coil spring CS.

According to the pitch conversion transfer device 30 according to the third embodiment, the elastic force by the coil spring CS acts on the cam follower 60, thereby the second gripper G30 can be returned to the waiting posture in the second region A2 and the fourth region A4 where the second cam 55 is not provided.

In the delivery posture according to a fourth embodiment of the present disclosure, a central axis C of the gripper G30 directly related to delivery of a container PB intersects a rotation center CC of the rotation wheel 41, and each of the central axes C of the grippers G30 related to the delivery of the container PB in front and rear of the gripper G30 do not intersect the rotation center CC of the rotation wheel 41.

According to the pitch conversion transfer device 30 according to the fourth embodiment, the container PB can be easily delivered to the downstream transfer device 100.

The cam follower 60 that operates in accordance with the first cam 51 according to a fifth embodiment of the present disclosure brings the gripper G30 into the receiving posture that is the first pitch in opposition to an elastic force by the coil spring CS.

According to the pitch conversion transfer device 30 according to the fifth embodiment, even when the device does not include a particularly special configuration, the second gripper G30 can be returned to the waiting posture when the cam follower 60 is separated from the first cam 51.

In the receiving posture according to a sixth embodiment of the present disclosure, a central axis C of the second gripper G30 directly related to reception of the container PB and each of the central axes C of the second grippers G30 related to the reception of the container PB in front and rear of the second gripper G30 intersect a rotation center CC of the rotation wheel 41.

The pitch conversion transfer device 30 according to a seventh embodiment of the present disclosure includes a sealing structure 80 that covers the rotation unit 40, and an air supply pipe 82 that supplies air to an inside of the sealing structure 80.

The pitch conversion transfer device 30 according to the seventh embodiment includes the sealing structure 80 to set the inside of the sealing structure 80 to a positive pressure by blocking the outside air and by supplying air to the inside of the sealing structure 80. In this manner, it is possible to prevent the infiltration of water into the inside of the sealing structure 80.

In addition to the above, it is possible to select the configurations described in the above-mentioned embodiments or change the configurations to other configurations as appropriate.

For example, the coil spring CS is used as the elastic body for maintaining the gripper in the waiting posture. However, this is only a preferable example, and for example, other elastic bodies such as a plate spring can be used.

In addition, in the present disclosure, the pitch is changed at the time of delivery and at the time of reception of the container PB as the article by using the first cam 51 and the second cam 55. However, the pitch between the upstream transfer device 10 or the downstream transfer device 100 and the pitch conversion transfer device 30 may be converted by using one of the first cam 51 and the second cam 55, respectively.

Further, even in a case where a circumferential speed difference (difference of product between a transfer diameter and a rotation speed) is generated between the upstream transfer device 10 or the downstream transfer device 100 and the pitch conversion transfer device 30, the circumferential speed difference between the gripper directly related to the delivery or reception of the article and the pitch conversion transfer device 30 can be reduced by swinging the central axis C of the gripper.

### Reference Signs List

1: transfer system
10: upstream transfer device
G10: first gripper
11: rotation wheel
13: first grip piece
15: second grip piece
30: pitch conversion transfer device
G30: second gripper
33: first grip piece
35: second grip piece
40: rotation unit
41: rotation wheel
42: rotary shaft
44: drive shaft
45: drive motor
46: coupler
50: pitch conversion unit
51: first cam
52: first cam plate
54: first cam groove
55: second cam
56: second cam plate
58: second cam groove
60: cam follower
61: main shaft
63: swing arm
65: cam pin
67: regulating body
69: support
72: first support cylinder
73: second support cylinder
80: sealing structure
81: first surrounding body
82: air supply pipe
83: side wall
85: bottom wall
86: first labyrinth element
87: second surrounding body
88: second labyrinth element
89: labyrinth structure
90: fixing unit
91: holding cylinder
93: cam support
G30: second gripper
100: downstream transfer device
101: rotation wheel
G100: third gripper
103: first grip piece
105: second grip piece
CS: coil spring
PB: container
PP1: first point
PP2: second point

## Claims

1. A pitch conversion transfer device comprising:
a rotation unit that includes a rotation wheel in which a plurality of grippers that grip an article to be transferred are swingably provided; and
a pitch conversion unit that performs conversion between a first pitch of the gripper that receives the article at a first point and a second pitch different from the first pitch of the gripper that delivers the article at a second point,
wherein the pitch conversion unit includes
a second cam that is provided corresponding to the second point,
a cam follower that brings the gripper into a delivery posture that is the second pitch by operating in accordance with the second cam, and
an elastic body that brings the gripper into a waiting posture different from the delivery posture between the first point and the second point.

2. The pitch conversion transfer device according to Claim 1,
wherein the pitch conversion unit includes
a first cam that is provided corresponding to the first point,
the cam follower that brings the gripper into a receiving posture that is the first pitch by operating in accordance with the first cam, and
the elastic body that brings the gripper into the waiting posture different from the receiving posture between the first point and the second point.

3. The pitch conversion transfer device according to Claim 1 or 2,
wherein the cam follower that operates in accordance with the second cam brings the gripper into the delivery posture that is the second pitch, in opposition to an elastic force by the elastic body.

4. The pitch conversion transfer device according to Claim 3,
wherein in the delivery posture, a central axis of the gripper directly related to delivery of the article intersects a rotation center of the rotation wheel, and
each of the central axes of the grippers related to the delivery of the article in front and rear of the gripper does not intersect the rotation center of the rotation wheel.

5. The pitch conversion transfer device according to Claim 2,
wherein the cam follower that operates in accordance with the first cam brings the gripper into the receiving posture that is the first pitch in opposition to an elastic force by the elastic body.

6. The pitch conversion transfer device according to Claim 5,
wherein in the receiving posture, a central axis of the gripper directly related to reception of the article and each of the central axes of the grippers related to the reception of the article in front and rear of the gripper intersect a rotation center of the rotation wheel.

7. The pitch conversion transfer device according to any one of Claims 1 to 6, further comprising:
a sealing structure that covers the rotation unit; and
an air supply pipe that supplies air to an inside of the sealing structure.
